# EUROPEAN PATENT APPLICATION

(11) **EP 2 784 993 A1**
(43) Date of publication of application: **01.10.2014**
(21) Application number: 13161872.0
(22) Date of filing: 29.03.2013
(51) Int. Cl.: H04L 12/715

(54) **Method and device for setting up paths between network elements belonging to different network domains of a software-defined network**

(71) Applicant: ALCATEL LUCENT, 92100 Boulogne-Billancourt (FR)
(72) Inventor: Ben Houidi, Zied, 91620 Nozay (FR); Pouyllau, Helia, 91940 Les Ulis (FR)
(74) Representative: Camus, Olivier Jean-Claude

(57) **Abstract**

A method allows setting up a path between network elements (NE11-NE63) belonging to different network domains (ND1-ND3) controlled by controllers (C1-C3) of a SDN. This method comprises a step (i) during which a path initiator informs a controller (C1) that it needs a path to allow data packet forwarding between a first network element (NE11) of its network domain (ND1) and a second network element (NE63) of another network domain (ND3), and a step (ii) during which this controller (C1) generates a message, comprising forwarding path information defining this second network element (NE63) and a chosen type of a path to be defined between these first and second network elements, and data identification information defining a chosen path mode, and transmits this message either to a neighbour controller (C2) involved into this path, or to a last controller (C3) controlling the second network element (NE63), depending on this chosen mode.

## Description

### Field of the Invention

The present invention relates to software-defined networks (or SDNs) comprising independent network domains, each comprising a set of network elements administrated by a controller, and more precisely to setting up of paths (i.e. transport paths, tunnels, or routed flows) between network elements administrated by independent controllers of such SDNs.

One means here by "network element" a router or a switch belonging to a network domain and controlled by at least one controller, by "controller" an equipment associated to a network domain and having control on the forwarding plane of several network elements, and by "network domain" a set of network elements controlled by a single administrative entity (for instance, a controller).

### Background of the Invention

In a computer network, setting up a path between a first network element, called "source" and belonging to a first network domain, and a second network element, called "destination" and belonging to a second network domain, first requires an end-to-end path to be determined, for instance by means of a routing protocol or a path computation element in case of inter-domain path computation. Then appropriate "labels" or routes must be enforced in concerned network elements to implement this determined end-to-end path.

In a classical network, distributed signalling protocols may be used to enforce the routes or the labels between concerned network elements. For instance, one may use the BGP protocol ("Border Gateway Protocol") to distribute IP prefixes for destination-based routes, or protocols such as RSVP-TE or LDP to distribute labels for establishing label switched paths (or LSPs). But, in a software-defined network the network elements do not necessarily implement signalling protocols because they may be only forwarding engines configured and administrated by independent controllers.

It is recalled that BGP is a signalling protocol that is used to establish BGP routes in the Internet between network domains administrated by different entities ("autonomous systems" (or ASs)). A BGP route establishment results from propagation of information (signalling how to reach a given destination) from this destination toward different sources. BGP routes are flooded between network domains from neighbour to neighbour, and network elements connecting neighbouring network domains are responsible of the exchange of BGP routes between their respective network domains. To do so, they establish BGP sessions therebetween, during which they use received BGP routes to update their respective routing table with the proper route to reach a destination.

A BGP route is defined by a vector comprising a destination IP prefix (defining the set of destinations that can be reachable with the BGP route), a next hop (i.e. the address of the next hop network element to which the data packets must be forwarded to reach the designated destination), an AS path (i.e. a list of network domains (in the form of AS numbers) that must be used to reach the designated destination), and other attributes that are used to compare routes comprising the designated destination.

So, BGP can only be used to define destination-based routes, because each network element determines where to route the data packet it receives from the (final) destination address, and then it cannot be used for defining routes based on path identifiers (such as MPLS labels or VLAN tags) or based on flow identifiers (such as IP sources or TCP ports). Moreover, BGP cannot be used to define explicit paths, because its primary goal is to allow each network domain to only choose how to route received data packets between the network elements it comprises, without having control on the end-to-end path.

The resource reservation protocol extensions for LSP tunnels (or RSVP-TE) is a protocol intended for establishing and making reservation of a path across a set of interconnected network elements. It allows setting up (among others) an explicit path in terms of hops needing to be crossed. To this effect, RSVP uses two types of message: path messages and reservation (or RESV) messages. A path message is first sent hop by hop from the source to the destination, following the defined explicit route, then a series of RESV messages is sent backwards from the destination to the source in order to reserve the path and set up it in terms of forwarding plane. In the reservation (RESV) path, each network element generates an MPLS label for the path and sends it to the next network element in the path so that it takes it into account. If the operation is successful, then the forwarding of packets can begin. The labels distributed during the RESV signalling part are used to forward the data packets (each network element analyses the incoming label of the received data packets and use the corresponding information to determine where to forward these data packets and which outgoing label to assign to these data packets before forwarding them to the next hop).

So, RSVP-TE can only be used to define an explicit path on network elements that are themselves control elements. Moreover, RSVP-TE can only be used to establish label switched paths (or LSPs), but not paths in which data packets are forwarded based on other types of identifier than MPLS.

So there is no solution offering a signalling protocol that allows transport of forwarding path information (defining network elements involved in routing) and of control path information (defining which controllers control these network elements) and that defines what a controller needs to do when it receives a signalling message, because SDN controllers are only used for intra-domain purpose.

### Summary of the invention

So the invention aims notably at allowing transport of forwarding path information and of control path information, but also establishment of generic paths and not only tunnels in a SDN.

To this effect the invention notably provides a method, intended for defining a path between network elements belonging to different network domains controlled respectively by controllers of a software-defined network (or SDN), and comprising:
- a step (i) during which a path initiator informs the controller of a network domain that it needs a path to allow data packet forwarding between a first network element of this network domain and a second network element of another network domain, and
- a step (ii) during which this controller generates a message, comprising forwarding path information defining at least this second network element and a chosen type of a path to be defined between these first and second network elements, and data identification information defining a chosen mode of this path, and transmits this generated message either to a neighbour controller involved into the path, or to the last controller controlling the second network element (possibly hop-by-hop), depending on this chosen mode.

It is important to note that the path initiator could be a network administrator, a network element or a network entity that wants to initiate the forwarding, for instance.

So, the invention allows for the establishment of an end-to-end explicit path that takes into consideration not only destination IP addresses but also other flow identifiers such as MPLS labels or IP flow identifiers.

Further embodiments of the method according to the invention may include additional characteristics considered separately or combined, and notably :
- the path type may be chosen from a group comprising at least an implicit type and an explicit type;
- the path mode may be chosen from a group comprising at least a tunnel, a flow route with re-identification and a flow route with identification and tunnelling;
- when the path type is the implicit type and the path mode is a tunnel, the controller may transmit the generated message to the last controller, and the latter may execute operations requested by the content of the message in its own network domain, may generate a tunnel label and may forward backwards another message comprising this tunnel label to a neighbour controller involved into the path so that it locally sets up this tunnel path, and so on till the other message reaches the controller controlling the first network element;
- when the path type is the implicit type and the path mode is a flow route, the controller may transmit the generated message to a neighbour controller involved into the path so that it executes operations requested by the content of this message in its own network domain and forwards it to a next neighbour controller involved into the path, the operation execution and the message transmission being repeated into each controller involved into the path till the message reaches the last controller controlling the second network element;
- when the path type is the explicit type, the forwarding path information may further define a sub-type chosen from a group comprising at least a strict sub-type, a loose sub-type, and a very loose sub-type;
   ➢ when the sub-type is the strict sub-type and the path mode is a tunnel, the forwarding path information may comprise a list of network elements involved in each network domain crossed by the path, the generated message may further comprise control path information defining a list of controllers controlling respectively the network domains crossed by the path, and the controller may transmit the generated message to the last controller comprised into this controller list so that it executes operations requested by the content of the message in its own network domain, generates a tunnel label and forwards backwards another message comprising this tunnel label to a neighbour controller comprised into the controller list so that it locally sets up the tunnel path, and so on till the other message reaches the controller controlling the first network element;
   ➢ when the sub-type is the strict sub-type and the path mode is a flow route, the forwarding path information may comprise a list of network elements involved in each network domain crossed by the path, the data identification information may comprise flow specifications defining rules allowing a flow to be identified, the generated message may further comprise control path information defining a list of controllers controlling respectively the network domains crossed by the path, and the controller may transmit the generated message to a neighbour controller comprised into the controller list so that it executes operations requested by the content of the message in its own network domain and forwards it to a next neighbour controller comprised into the controller list, the operation execution and the message transmission being repeated into each controller comprised into the controller list till the message reaches the last controller comprised into the controller list and controlling the second network element;
   ➢ when the sub-type is the loose sub-type and the path mode is a tunnel, the forwarding path information may comprise couples of ingress network element and egress network element belonging to each network domain crossed by the path and that must belong to the path, the generated message may further comprise control path information defining a list of controllers controlling respectively the network domains crossed by the path, and the controller may transmit the generated message to the last controller comprised into the controller list so that it executes operations requested by the content of the message in its own network domain, generates a tunnel label and forwards backwards another message comprising this tunnel label to a neighbour controller comprised into the controller list so that it locally sets up the tunnel path, and so on till the other message reaches the controller controlling the first network element;
   ➢ when the sub-type is the loose sub-type and the path mode is a flow route, the forwarding path information may comprise couples of ingress network element and egress network element belonging to each network domain crossed by the path and that must belong to the path, the data identification information may comprise flow specifications defining rules allowing to identify a flow, the generated message may further comprise control path information defining a list of controllers controlling respectively the network domains crossed by the path, and the controller may transmit the generated message to a neighbour controller comprised into the controller list so that it executes operations requested by the content of the message in its own network domain and forwards it to a next neighbour controller comprised into the controller list, the operation execution and the message transmission being repeated into each controller comprised into the controller list till the message reaches a last controller comprised into the controller list and controlling the second network element;
   ➢ when the sub-type is the very loose sub-type and the path mode is a tunnel, the forwarding path information may comprise a list of network domains to be crossed by the path, the generated message may further comprise control path information defining a list of controllers controlling respectively the network domains crossed by the path, and the controller may transmit the generated message to the last controller comprised into the controller list so that it executes operations requested by the content of the message in its own network domain, generates a tunnel label and forwards backwards another message comprising this tunnel label and a designation of a next egress network element belonging to a next network domain to be crossed by the path and that is intended for ensuring interconnection to its own network domain to a neighbour controller comprised into the controller list so that it locally sets up the tunnel path, and so on till the other message reaches the controller controlling the first network element;
   ➢ when the sub-type is the very loose sub-type and the path mode is a flow route, the forwarding path information may comprise a list of network domains to be crossed by the path and at least a designation of a next ingress network element belonging to a next network domain to be crossed by the path and that is intended for ensuring interconnection to its own network domain, the data identification information may comprise flow specifications defining rules allowing to identify a flow, the generated message may further comprise control path information defining a list of controllers controlling respectively the network domains crossed by the path, and the controller may transmit the generated message to a neighbour controller comprised into the controller list so that it executes operations requested by the content of the message in its own network domain and forwards it to a next neighbour controller comprised into the controller list with a designation of a next ingress network element belonging to a next network domain to be crossed by the path and that is intended for ensuring interconnection to its own network domain, the operation execution, the addition of next ingress network element and the message transmission being repeated into each controller comprised into the controller list till the message reaches a last controller comprised into the controller list and controlling the second network element.

Further embodiment of the invention also offers a computer program product comprising a set of instructions arranged for performing a method such as the one above introduced to allow setting up of a path between network elements belonging to different network domains controlled respectively by controllers of a software-defined network.

Still further embodiment of the invention also offers a device, intended for equipping a controller belonging to a software-defined network and controlling network elements belonging to a network domain, and arranged, when it is informed by a path initiator that it needs a path to allow data packet forwarding between a first network element of this network domain and a second network element of another network domain of the software-defined network:
- for generating a message comprising forwarding path information defining at least this second network element and a chosen type of a path to be defined between these first and second network elements, and data identification information defining a chosen mode of this path, and
- for transmitting this generated message either to a neighbour controller belonging to the software-defined network and involved into the path, or to a last controller belonging to the software-defined network and controlling the second network element (possibly hop-by-hop), depending on the chosen mode.

Still further embodiment of the invention also offers a controller, intended for equipping a software-defined network and for controlling network elements, and comprising a device such as the one above introduced.

### Brief Description of the Drawings

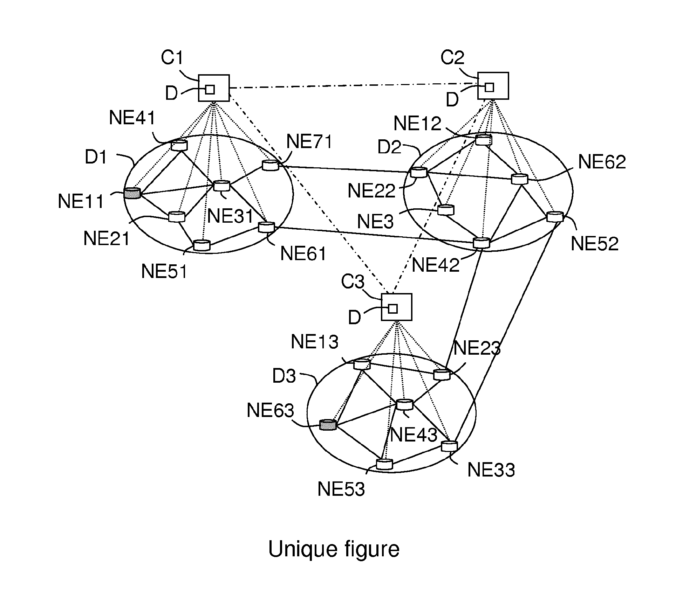

Other features and advantages of the invention will become apparent on examining the detailed specifications hereafter and the appended drawing, wherein the unique figure schematically and functionally illustrates a part of a software-defined network comprising controllers, each comprising a device according to the invention.

The appended drawing may serve not only to complete the invention, but also to contribute to its definition, if need be.

### Detailed Description

The invention aims, notably, at offering a method, and an associated device D, intended for allowing setting up of paths between network elements NEij belonging to different network domains NDj controlled respectively by controllers Cj of a software-defined network, for instance.

A simplified example of software-defined network (or SDN) is illustrated in the unique figure. In this example, the software-defined network comprises three network domains NDj (j = 1 to 3), each controlled by a controller Cj.

In the non-limiting example the first network domain ND1 comprises seven network elements NEij (i = 1 to 7), the second network domain ND2 comprises six network elements NEij (i = 1 to 6), and the third network domain ND3 comprises six network elements NEij (i = 1 to 6).

But the number of network domains NDj of the software-defined network can take any value as soon as it is equal to or greater than two (2). Moreover, the number of network elements NEij of a network domain NDj can take any value as soon as it is equal to or greater than one (1).

Controllers Cj may be Open Flow controllers, or software extensions of a network management system (or NMS) of different autonomous systems (or ASs), or else IRS ("Interface to the Routing System") controllers.

As mentioned above, the invention notably proposes a method intended for allowing setting up of paths between network elements NEij belonging to different network domains NDj of the software-defined network.

This method comprises a first step (i) and a second step (ii). This second step (ii) can be implemented in devices D equipping respectively the controllers Cj of the network domains NDj.

Each device D may be made of software modules (and in this case it constitutes a computer program product comprising a set of instructions arranged for performing the second step (ii) of the method when it is executed by processing means of a controller Cj). But this is not mandatory. Indeed, it may be made of a combination of electronic circuit(s) (or hardware module(s)) and software modules.

During the first step (i), of the method, a path initiator informs a controller Cj (here the first one C1, called initial) of a network domain NDj (here the first one ND1) that it needs a path to allow data packet forwarding between a first network element NEij (here NE11) of this network domain ND1 and a second network element NEi'j' (here NE63) of another network domain NDj' (here the third one ND3). In the following description, the first network element NEij (here NE11) is called "source", while the second network element NEi'j' (here NE63) is called "destination".

It is important to note that the path initiator may be a network administrator, a network element NEij or a network entity that wants to initiate the data packet forwarding, for instance. In the following description it will be considered, as example, that the path initiator is the first network element N Eij.

During the second step (ii), of the method, the initial controller C1 (of the first network domain ND1) first generates a message comprising at least forwarding path information defining at least the destination NE63 and a chosen type of a path to be defined between the source NE11 and the destination NE63, and data identification information defining a chosen mode of this path. Then, this initial controller C1 transmits this generated message either to a neighbour controller Cj" (here C2) involved into the path, or to a last controller Cj' (here C3) controlling the destination NE63, depending on this chosen mode.

So, the method can be considered as a new protocol that is run between different controllers and aims at setting up a path in a multi-domain environment. This protocol takes as input a description of the path that needs to be established and implements it in the network elements.

It is important to note that the initial controller C1 may transmit the generated message to the last controller C3 either directly, or indirectly (i.e. hop-by-hop).

It is also important to note that each device D, equipping a controller Cj controlling a network domain NDj crossed by the path, is arranged for processing the message received by its controller Cj, and the latter (Cj) is arranged for executing operations requested by the content of this received message in its own network domain NDj. As explained below, amongst these operations one may mention a possible choice of at least some of the network elements NEij of its own network domain NDj that will participate to the path, or a possible choice of an ingress or egress network element NEij" of a neighbour network domain NDj" that will have to participate to the path, or a generation of a (tunnel) label (possibly a MPLS one) used to signal to the upstream network domain which label it should use when it sends data packets, or else a generation of flow specifications defining rules allowing to identify a flow (e.g. IP source range or TCP port(s)).

In the simplest case, the flow specifications are an input given by the path initiator. In this case, the flow specifications should remain the same along the path. However, it might be useful for certain advanced contexts to modify these flow specifications.

The path type may be an implicit type or an explicit type, for instance.

When the path is implicit, the destination NE63 is provided by the initial controller C1, and the choice of the path is done independently by each controller Cj involved in the path. In this case, each device D, or each controller Cj, must comprise a controller forwarding table giving a correspondence between destination network elements and next (neighbour) controllers Cj that control network elements allowing to reach these destination network elements.

Moreover, the path mode may be a tunnel, a flow route with re-identification or a flow route with identification and tunnelling, for instance.

In the tunnel mode, the output of the path set up procedure is a tunnel that starts at the source NE11 and terminates at the destination NE63. This tunnel path is initiated by the last controller C3 backwards and hop by hop towards the initial controller C1 of the source NE11, on request of this initial controller C1.

In a flow route, a flow identified by a flow specification field is routed on the path that has been specified by a forwarding path information. In the flow route with re-identification mode, the flow is defined by flow specifications and is identified at each network element NEij of the path (or at each network domain NDj crossed by the path). In the flow route with identification and tunnelling, the flow is only identified in the source NE11 and then tunneled till it reaches the destination NE63.

When a device D decides to establish a requested path with an implicit type and a tunnel mode, it orders to its initial controller C1 to transmit the generated message to the last controller C3 because it is responsible of setting up the tunnel path backwards and hop by hop towards the initial controller C1. Then, the last controller C3 executes operations requested by the content of the received generated message in its own network domain, generates a tunnel label and forwards backwards another message comprising this tunnel label to a neighbour controller Cj" (here C2) involved into the path so that it locally sets up this tunnel path.

These operation execution, tunnel label generation and message backwards forwarding are repeated in each controller Cj" involved in the path till the other message reaches the initial controller C1 controlling the source NE11. So, each controller involved in the path generates a path label for the path being set up, installs this path label locally (i.e. in its own network domain ND1), and sends this path label to its predecessor (determined into the controller forwarding table). Thanks to the information contained in a received other message (or path set up message), a predecessor knows that in order for this path to be set up it will have to use the label that has been generated by its successor.

When a device D decides to establish a requested path with an implicit type and a flow route mode, it orders to its initial controller C1 to transmit the generated message to a neighbour controller Cj" (here C2) involved into the path and that it has determined into the controller forwarding table. Then, this neighbour controller C2 executes operations requested by the content of this message in its own network domain ND2 and forwards it to a next neighbour controller (here C3) involved into the path and that it has determined into the controller forwarding table.

These operation execution and message forwarding are repeated into each controller Cj" involved into the path till the message reaches the last controller Cj' (here C3) controlling the destination NEi'j' (here NE63).

When a device D decides to establish a requested path with an explicit type, the forwarding path information contained into the generated message preferably defines further a sub-type. The latter can be a strict sub-type, a loose sub-type or a very loose sub-type, for instance.

For a strict explicit path, the initial controller C1 specifies all the network elements NEij that must belong to the path, in its message. So, each controller Cj involved in the path must respect a full list of network elements that need to belong to the path.

For a loose explicit path, the initial controller C1 specifies the ingress and egress network elements of each network domain NDj that must be crossed by the path, in its message. So, each controller Cj involved in the path must respect the ingress and egress network elements designated for its own network domain NDj, and therefore it is free to choose any internal path between these designated ingress and egress network elements.

For a very loose explicit path, the initial controller C1 specifies the network domains NDj that must be crossed by the path, in its message.

When a device D decides to establish a requested path with a strict explicit type and a tunnel mode, the forwarding path information contained into the generated message comprises the list of network elements NEij involved in each network domain NDj that must be crossed by this path, and the generated message further comprises control path information defining a list of controllers Cj that control respectively the network domains NDj crossed by this path.

In this case, the device D orders to its initial controller C1 to transmit the generated message to the last controller C3 comprised into the controller list, because it is responsible of setting up the tunnel path backwards and hop by hop towards the initial controller C1. Then, the last controller C3 executes operations requested by the content of the received generated message in its own network domain, generates a tunnel label and forwards backwards another message comprising this tunnel label to a neighbour controller Cj" (here C2) comprised into the controller list so that it locally sets up this tunnel path.

These operation execution, tunnel label generation and message backwards forwarding are repeated in each controller Cj" comprised into the controller list till the other message reaches the initial controller C1 controlling the source NE11. So, each controller comprised into the controller list (and therefore involved in the path) generates a path label for the path being set up, installs this path label locally (i.e. in its own network domain ND1), and sends this path label to its predecessor (determined into the controller forwarding table). Thanks to the information contained in a received other message (or path set up message), a predecessor knows that in order to use this path it will have to use the label that has been generated by its successor.

It is important to note that it is also possible for this tunnel mode to use a RSVP like approach in which the path set up procedure is split into two phases exactly like with RSVP. In this case, it is up to the RESV messages to set up the appropriate tunnel path by generating the appropriate path labels.

When a device D decides to establish a requested path with a strict explicit type and a flow route mode, the forwarding path information contained into the generated message comprises the list of network elements NEij involved in each network domain NDj that must be crossed by this path, and the generated message further comprises control path information defining a list of controllers Cj that control respectively the network domains NDj crossed by this path.

In this case, the device D orders to its initial controller C1 to transmit the generated message to a neighbour controller Cj" (here C2) comprised into the controller list. Then, this neighbour controller C2 executes operations requested by the content of this message in its own network domain ND2 and forwards it to a next neighbour controller (here C3) comprised into the controller list.

These operation execution and message forwarding are repeated into each controller Cj" comprised into the controller list (and therefore involved into the path) till the message reaches the last controller Cj' (here C3) controlling the destination NEi'j' (here NE63).

When a device D decides to establish a requested path with a loose explicit type and a tunnel mode, the forwarding path information contained into the generated message comprises couples of ingress network element and egress network element, belonging to each network domain NDj that must be crossed by this path, and that must belong to this path, and the generated message further comprises control path information defining a list of controllers Cj that control respectively the network domains NDj crossed by this path.

In this case, the device D orders to its initial controller C1 to transmit the generated message to the last controller C3 comprised into the controller list, because it is responsible of setting up the tunnel path backwards and hop by hop towards the initial controller C1. Then, the last controller C3 executes operations requested by the content of the received generated message in its own network domain, generates a tunnel label and forwards backwards another message comprising this tunnel label to a neighbour controller Cj" (here C2) comprised into the controller list so that it locally sets up this tunnel path.

These operation execution, tunnel label generation and message backwards forwarding are repeated in each controller Cj" comprised into the controller list till the other message reaches the initial controller C1 controlling the source NE11. So, each controller comprised into the controller list (and therefore involved in the path) generates a path label for the path being set up, installs this path label locally (i.e. in its own network domain ND1), and sends this path label to its predecessor (determined into the controller forwarding table). Thanks to the information contained in a received other message (or path set up message), a predecessor knows that in order this path could be used it will have to use the label that has been generated by its successor.

It is important to note that it is also possible for this tunnel mode to use a RSVP like approach in which the path set up procedure is split into two phases exactly like with RSVP. In this case, it is up to the RESV messages to set up the appropriate tunnel path by generating the appropriate path labels.

When a device D decides to establish a requested path with a loose explicit type and a flow route mode, the forwarding path information contained into the generated message comprises couples of ingress network element and egress network element, belonging to each network domain NDj that must be crossed by this path, and that must belong to the path, the data identification information comprises flow specifications defining rules allowing to identify a flow, and the generated message further comprises control path information defining a list of controllers Cj that control respectively the network domains NDj crossed by this path.

In this case, the device D orders to its initial controller C1 to transmit the generated message to a neighbour controller Cj" (here C2) comprised into the controller list. Then, this neighbour controller C2 executes operations requested by the content of this message in its own network domain ND2 and forwards it to a next neighbour controller (here C3) comprised into the controller list.

These operation execution and message forwarding are repeated into each controller Cj" comprised into the controller list (and therefore involved into the path) till the message reaches the last controller Cj' (here C3) controlling the destination NEi'j' (here NE63).

When a device D decides to establish a requested path with a very loose explicit type and a tunnel mode, the forwarding path information contained into the generated message comprises a list of network domains NDj that must be crossed by this path, and the generated message further comprises control path information defining a list of controllers Cj that control respectively the network domains NDj crossed by this path.

In this case, the device D orders to its initial controller C1 to transmit the generated message to the last controller C3 comprised into the controller list, because it is responsible of setting up the tunnel path backwards and hop by hop towards the initial controller C1. Then, the last controller C3 executes operations requested by the content of the received generated message in its own network domain, generates a tunnel label and a designation of a next egress network element belonging to a next network domain NDj" (here C2) to be crossed by the path and that is intended for ensuring interconnection to its own network domain NDj' (here C3), and forwards backwards another message comprising this tunnel label and this next egress network element designation to a neighbour controller Cj" (here C2) comprised into the controller list so that it locally sets up this tunnel path.

The designation of a next egress network element is useful in the case where two network domains interconnect at different points.

These operation execution, tunnel label generation, next egress network element designation, and message backwards forwarding are repeated in each controller Cj" comprised into the controller list till the other message reaches the initial controller C1 controlling the source NE11. So, each controller comprised into the controller list (and therefore involved in the path) generates a path label for the path being set up, installs this path label locally (i.e. in its own network domain ND1), and sends this path label to its predecessor (determined into the controller forwarding table). Thanks to the information contained in a received other message (or path set up message), a predecessor knows that in order to use this path it will have to use the label that has been generated by its successor.

When a device D decides to establish a requested path with a very loose explicit type and a flow route mode, the forwarding path information contained into the generated message comprises a list of network domains NDj that must be crossed by this path, and at least a designation of a next ingress network element belonging to a next network domain NDj" that must be crossed by the path and that is intended for ensuring interconnection to its own network domain NDj (here ND1), the data identification information comprises flow specifications defining rules allowing to identify a flow, and the generated message further comprises control path information defining a list of controllers Cj that control respectively the network domains NDj crossed by this path.

The designation of a next ingress network element is useful in the case where two network domains interconnect at different points.

In this case, the device D orders to its initial controller C1 to transmit the generated message to a neighbour controller Cj" (here C2) comprised into the controller list. Then, this neighbour controller C2 executes operations requested by the content of this message in its own network domain ND2 and forwards it to a next neighbour controller (here C3) comprised into the controller list, with a designation of a next ingress network element belonging to a next network domain NDj"' (here C3) that must be crossed by the path and that is intended for ensuring interconnection to its own network domain NDj" (here C2).

These operation execution, addition of next ingress network element and message forwarding are repeated into each controller Cj" comprised into the controller list (and therefore involved into the path) till the message reaches the last controller Cj' (here C3) controlling the destination NEi'j' (here NE63).

It is important to note that:
- when a list of network elements is comprised into a message, the latter preferably comprises further the size of this list,
- when a list of network domains is comprised into a message, the latter preferably comprises further the size of this list,
- when a list of controllers is comprised into a message, the latter preferably comprises further the size of this list.

The invention is not limited to the embodiments of method, device and controller described above, which are provided only as examples, but encompasses all alternative embodiments which may be considered by one skilled in the art within the scope of the claims hereafter.

## Claims

1. Method for defining a path between network elements (NEij) belonging to different network domains (NDj) controlled respectively by controllers (Cj) of a software-defined network, said method comprising a step (i) during which a path initiator informs the controller (Cj) of a network domain (NDj) that it needs a path to allow data packet forwarding between a first network element (NEij) of said network domain (NDj) and a second network element (NEi'j') of another network domain (NDj'), and a step (ii) during which said controller (Cj) generates a message, comprising forwarding path information defining at least said second network element (NEi'j') and a chosen type of a path to be defined between said first (NEij) and second (NEi'j') network elements, and data identification information defining a chosen mode of said path, and transmits said generated message either to a neighbour controller (Cj") involved into said path, or to a last controller (Cj') controlling said second network element (NEi'j'), depending on said chosen mode.

2. Method according to claim 1, wherein said path type is chosen from a group comprising at least an implicit type and an explicit type.

3. Method according to one of claims 1 and 2, wherein said path mode is chosen from a group comprising at least a tunnel, a flow route with re-identification, and a flow route with identification and tunnelling.

4. Method according to the combination of claims 2 and 3, wherein, when said path type is said implicit type and said path mode is a tunnel, said controller (Cj) transmits said generated message to said last controller (Cj'), and the latter (Cj') executes operations requested by the content of said message in its own network domain, generates a tunnel label and forwards backwards another message comprising said tunnel label to a neighbour controller (Cj") involved into said path so that it locally sets up said tunnel path, and so on till said other message reaches said controller (Cj) controlling said first network element (NEij).

5. Method according to the combination of claims 2 and 3, wherein, when said path type is said implicit type and said path mode is a flow route, said controller (Cj) transmits said generated message to a neighbour controller (Cj') involved into said path so that it executes operations requested by the content of said message in its own network domain and forwards it to a next neighbour controller (Cj") involved into said path, said operation execution and said message transmission being repeated into each controller (Cj") involved into said path till said message reaches said last controller (Cj') controlling said second network element (NEi'j').

6. Method according to the combination of claims 2 and 3, wherein, when said path type is said explicit type, said forwarding path information further defines a sub-type chosen from a group comprising at least a strict sub-type, a loose sub-type, and a very loose sub-type.

7. Method according to claim 6, wherein, when said sub-type is said strict sub-type and said path mode is a tunnel, said forwarding path information comprises a list of network elements (NEij) involved in each network domain (NDj) crossed by said path, said generated message further comprises control path information defining a list of controllers (Cj) controlling respectively said network domains (NDj) crossed by said path, and said controller (Cj) transmits said generated message to said last controller (Cj') comprised into said controller list, and said last controller (Cj') executes operations requested by the content of said message in its own network domain, generates a tunnel label and forwards backwards another message comprising said tunnel label to a neighbour controller (Cj") comprised into said controller list so that it locally sets up said tunnel path, and so on till said other message reaches said controller (Cj) controlling said first network element (NEij).

8. Method according to claim 6, wherein, when said sub-type is said strict sub-type and said path mode is a flow route, said forwarding path information comprises a list of network elements (NEij) involved in each network domain (NDj) crossed by said path, said data identification information comprises flow specifications defining rules allowing to identify a flow, said generated message further comprises control path information defining a list of controllers (Cj) controlling respectively said network domains (NDj) crossed by said path, and said controller (Cj) transmits said generated message to a neighbour controller (Cj") comprised into said controller list so that it executes operations requested by the content of said message in its own network domain and forwards it to a next neighbour controller (Cj"') comprised into said controller list, said operation execution and said message transmission being repeated into each controller (Cj') comprised into said controller list till said message reaches a last controller (Cj') comprised into said controller list and controlling said second network element (NEi'j').

9. Method according to claim 6, wherein, when said sub-type is said loose sub-type and said path mode is a tunnel, said forwarding path information comprises couples of ingress network element and egress network element belonging to each network domain (NDj) crossed by said path and that must belong to said path, said generated message further comprises control path information defining a list of controllers (Cj) controlling respectively said network domains (NDj) crossed by said path, and said controller (Cj) transmits said generated message to said last controller (Cj') comprised into said controller list, and said last controller (Cj') executes operations requested by the content of said message in its own network domain, generates a tunnel label and forwards backwards another message comprising said tunnel label to a neighbour controller (Cj") comprised into said controller list so that it locally sets up said tunnel path, and so on till said other message reaches said controller (Cj) controlling said first network element (NEij).

10. Method according to claim 6, wherein, when said sub-type is said loose sub-type and said path mode is a flow route, said forwarding path information comprises couples of ingress network element and egress network element belonging to each network domain (NDj) crossed by said path and that must belong to said path, said data identification information comprises flow specifications defining rules allowing to identify a flow, said generated message further comprises control path information defining a list of controllers (Cj) controlling respectively said network domains (NDj) crossed by said path, and said controller (Cj) transmits said generated message to a neighbour controller (Cj") comprised into said controller list so that it executes operations requested by the content of said message in its own network domain and forwards it to a next neighbour controller (Cj"') comprised into said controller list, said operation execution and said message transmission being repeated into each controller (Cj") comprised into said controller list till said message reaches a last controller (Cj') comprised into said controller list and controlling said second network element (NEi'j').

11. Method according to claim 6, wherein, when said sub-type is said very loose sub-type and said path mode is a tunnel, said forwarding path information comprises a list of network domains (NDj) to be crossed by said path, said generated message further comprises control path information defining a list of controllers (Cj) controlling respectively said network domains (NDj) crossed by said path, and said controller (Cj) transmits said generated message to said last controller (Cj') comprised into said controller list, and said last controller (Cj') executes operations requested by the content of said message in its own network domain, generates a tunnel label and forwards backwards another message comprising said tunnel label and a designation of a next egress network element belonging to a next network domain (NDj") to be crossed by said path and that is intended for ensuring interconnection to its own network domain (NDj') to a neighbour controller (Cj") comprised into said controller list so that it locally sets up said tunnel path, and so on till said other message reaches said controller (Cj) controlling said first network element (NEij).

12. Method according to claim 6, wherein, when said sub-type is said very loose sub-type and said path mode is a flow route, said forwarding path information comprises a list of network domains (NDj) to be crossed by said path and at least a designation of a next ingress network element belonging to a next network domain (NDj") to be crossed by said path and that is intended for ensuring interconnection to its own network domain (NDj), said data identification information comprises flow specifications defining rules allowing to identify a flow, said generated message further comprises control path information defining a list of controllers (Cj) controlling respectively said network domains crossed by said path, and said controller (Cj) transmits said generated message to a neighbour controller (Cj") comprised into said controller list so that it executes operations requested by the content of said message in its own network domain and forwards it to a next neighbour controller (Cj"') comprised into said controller list with a designation of a next ingress network element belonging to a next network domain (NDj"') to be crossed by said path and that is intended for ensuring interconnection to its own network domain (NDj"), said operation execution, said addition of next ingress network element and said message transmission being repeated into each controller comprised into said controller list till said message reaches said last controller (Cj') comprised into said controller list and controlling said second network element (NEi'j').

13. Computer program product comprising a set of instructions arranged for performing the method according to one of claims 1 to 12 to allow setting up of a path between network elements (NEij) belonging to different network domains (NDj) controlled respectively by controllers (Cj) of a software-defined network.

14. Device (D) for a controller (Cj) belonging to a software-defined network and intended for controlling network elements (NEij) belonging to a network domain (NDj), said device (D) being arranged, when it is informed by a path initiator that it needs a path to allow data packet forwarding between a first network element (NEij) of its network domain (NDj) and a second network element (NEi'j') of another network domain (NDj') of said software-defined network, for generating a message, comprising forwarding path information defining at least said second network element (NEi'j') and a chosen type of a path to be defined between said first (NEij) and second (NEi'j') network elements, and data identification information defining a chosen mode of said path, and for transmitting said generated message either to a neighbour controller (Cj") belonging to said software-defined network and involved into said path, or to a last controller (Cj') belonging to said software-defined network and controlling said second network element (NEi'j'), depending on said chosen mode.
